# FASCICULE DE BREVET EUROPEEN

(11) **EP 1 219 848 B1**
(45) Date de publication et mention de la délivrance du brevet: **23.08.2006**
(21) Numéro de dépôt: 01403349.2
(22) Date de dépôt: 21.12.2001
(51) Int. Cl.: F16D 23/06, F16D 23/02, F16D 11/10, F16H 3/12, F16H 3/089

(54) **Module de changement de vitesses et application**
Modul eines Schaltgetriebes und dessen Verwendung
Transmission modul and its application

(30) Priorité: 27.12.2000 FR 0017111
(43) Date de publication de la demande: 03.07.2002
(73) Titulaire: Peugeot Citroen Automobiles SA, 92200 Neuilly sur Seine (FR)
(72) Inventeur: Berier, Vincent, 95870 Bezons (FR); Le Doare, Jean-Yves, 94400 Vitry sur Seine (FR); Jonon, Fabrice, 92130 Issy les Moulineaux (FR)
(74) Mandataire: Bentz, Jean-Paul

(56) Documents cités:
- DE-A- 2 906 713
- FR-A- 2 613 015
- US-A- 5 701 984
- US-A- 6 109 128

## Description

La présente invention concerne, de façon générale, un module de changement de vitesses destiné à équiper une boîte de vitesses.

Plus précisément, l'invention concerne notamment un module de changement de vitesses pour boîte de vitesses, comprenant un arbre, des premier et second pignons montés fous sur l'arbre, des première et seconde couronnes garnies de crabots et respectivement solidaires en rotation des premier et second pignons, des premier et second éléments de friction mâles mutuellement adjacents et respectivement solidaires en rotation des premier et second pignons, et un synchroniseur, ce synchroniseur comprenant lui-même : des première et seconde bagues de synchronisation mutuellement adjacentes; des première et seconde dentures mâles respectivement portées par les première et seconde bagues de synchronisation; un moyeu monté fixe en rotation sur l'arbre; un manchon portant une denture femelle, monté fixe en rotation par rapport au moyeu, et axialement coulissant en translation, de part et d'autre d'une position neutre pour laquelle la denture femelle est libre de tout engrènement, entre des première et seconde positions d'engagement pour lesquelles la denture femelle engrène respectivement avec les crabots des première et seconde couronnes; des premier et second éléments de friction femelles, respectivement portés par les première et seconde bagues de synchronisation et disposés en regard des premier et second éléments de friction mâles avec lesquels ils coopèrent sélectivement pour accoupler progressivement en rotation, sous l'effet d'une sollicitation élastique axiale, le manchon avec l'un ou l'autre des pignons; et un organe d'appui élastique pour transmettre sélectivement aux première et seconde bagues de synchronisation une sollicitation élastique axiale lors de déplacements respectifs du manchon de sa position neutre vers ses première et seconde positions d'engagement.

L'utilisation de modules de ce type dans les boîtes de vitesses est connue par FR-A-2 789 139 et permet, au moyen d'un manchon unique, de sélectionner l'un ou l'autre de deux rapports de vitesses différents de cette boîte, selon que le manchon est déplacé vers sa première position d'engagement, ou vers sa seconde position d'engagement.

Cependant, dans la mesure où, précisément, un tel module, permet de sélectionner deux rapports de vitesses différents, le recours exclusif à des modules de ce type n'est a priori possible que sur les boîtes de vitesses comprenant un nombre pair de rapports de vitesses en marche avant, par exemple sur les boîtes à six rapports. Le document FR-A-2 789 139 décrit un module de changement de vitesses selon le préambule de la revendication 1.

Dans ce contexte, l'invention a précisément pour but de proposer un module de sélection de deux rapports de vitesses qui soit utilisable dans une boîte de vitesses préexistante ne comprenant qu'un nombre impair de rapports de vitesses en marche avant, cette adaptation permettant, à moindre frais, d'augmenter d'une unité le nombre de rapports de vitesses offerts par cette boîte. Ce but est atteint à l'aide d'un module de changement de vitesses selon la revendication 1 et à l'aide d'une application de ce module selon la revendication 8.

A cette fin, le module de l'invention, par ailleurs conforme à la définition générique qu'en donne le préambule ci-dessus, est essentiellement caractérisé en ce que le moyeu est monté sur une extrémité de l'arbre, en ce que le premier pignon est monté sur l'arbre entre le second pignon et le synchroniseur, en ce que la seconde couronne à crabots est reliée au second pignon par une douille cylindrique passant entre l'arbre et le premier pignon, et en ce que le manchon porte une troisième denture mâle qui engrène avec une partie active du moyeu, qui est conformée en cloche.

De préférence, ce module comprend des organes axiaux de réduction de frottement, tels que des aiguilles de roulement, disposés entre l'arbre et la douille et entre la douille et le premier pignon, et des organes radiaux de réduction de frottement, tels que des aiguilles de roulement, disposés entre le second pignon et le premier, entre le premier pignon et la seconde couronne à crabots, et entre la seconde couronne à crabots et le moyeu.

L'organe d'appui élastique comprend par exemple un ressort formé d'un jonc annulaire.

Par ailleurs, les éléments de friction mâles et femelles peuvent être respectivement constitués par des cônes mâles et femelles.

Dans un premier mode de réalisation possible de l'invention, la troisième denture mâle portée par le manchon est formée de cannelures externes, et la partie active du moyeu conformée en cloche est garnie de cannelures internes engrenant avec les cannelures externes du manchon.

Dans un second mode de réalisation possible de l'invention, la troisième denture mâle portée par le manchon est formée par une pluralité de reliefs radiaux, et la partie active du moyeu conformée en cloche présente une pluralité d'échancrures axiales correspondantes, dans lesquelles les reliefs radiaux sont reçus à coulissement.

Comme indiqué précédemment, le module de l'invention est particulièrement utilisable pour augmenter le nombre de rapports de vitesses offerts par une boîte de vitesses préexistante.

D'autres caractéristiques et avantages de l'invention ressortiront clairement de la description qui en est faite ci-après, à titre indicatif et nullement limitatif, en référence aux dessins annexés, dans lesquels :
- la Figure 1 est une vue en coupe d'un module conforme à un premier mode de réalisation de l'invention;
- la Figure 2 est une vue en perspective éclatée d'un module conforme à un premier mode de réalisation de l'invention;
- la Figure 3 est une vue en coupe d'un module conforme à un second mode de réalisation de l'invention; et
- la Figure 4 est une vue en perspective éclatée d'un module conforme à un second mode de réalisation de l'invention.

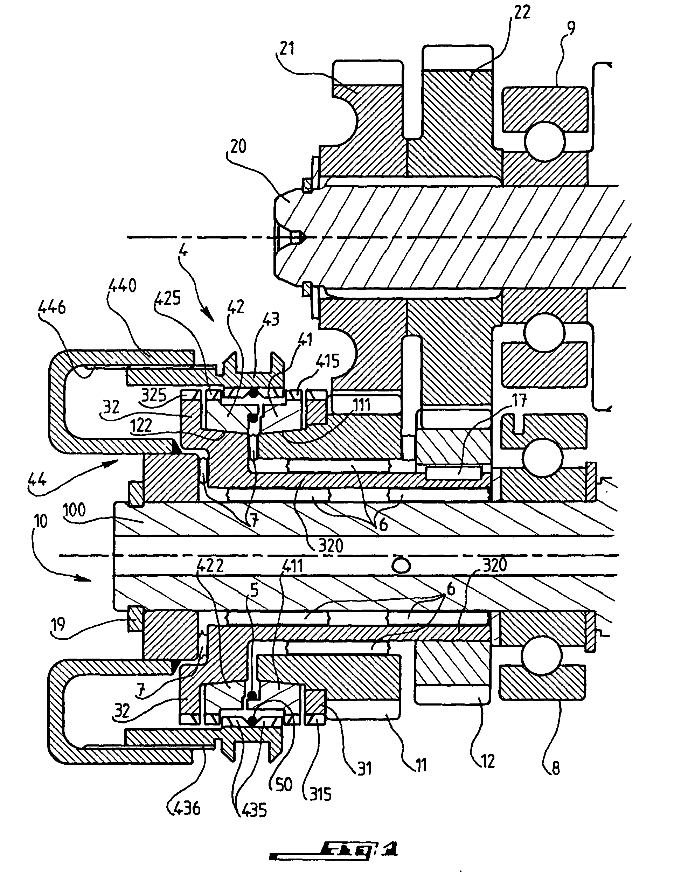

Comme annoncé précédemment, l'invention concerne un module de changement de vitesses destiné à équiper une boîte de vitesses et comprenant essentiellement (figure 1) un arbre 10, deux pignons 11 et 12, deux couronnes 31 et 32 garnies de crabots 315 et 325, deux éléments de friction mâles 111 et 122, et un synchroniseur 4.

Les deux pignons 11 et 12 sont montés fous sur l'arbre 10, cet arbre étant porté par des roulements tels que 8.

Les pignons 11 et 12 engrènent respectivement avec des pignons 21 et 22, qui sont montés fixes en rotation sur un arbre 20 porté par des roulements tels que 9, les pignons 21 et 22 transmettant en permanence leur mouvement de rotation aux pignons 11 et 12 dans le cas où l'arbre 20 est un arbre moteur.

Les couronnes 31 et 32 sont respectivement solidaires en rotation des pignons 11 et 12.

Enfin, les éléments de friction mâles 111 et 122, qui prennent avantageusement la forme de cônes mâles, sont mutuellement adjacents et respectivement solidaires en rotation des pignons 11 et 12.

Le synchroniseur 4 comprend lui-même deux bagues de synchronisation 41 et 42, deux dentures mâles 415 et 425, un moyeu 44, un manchon 43, deux éléments de friction femelles 411 et 422, et au moins un organe d'appui élastique 5.

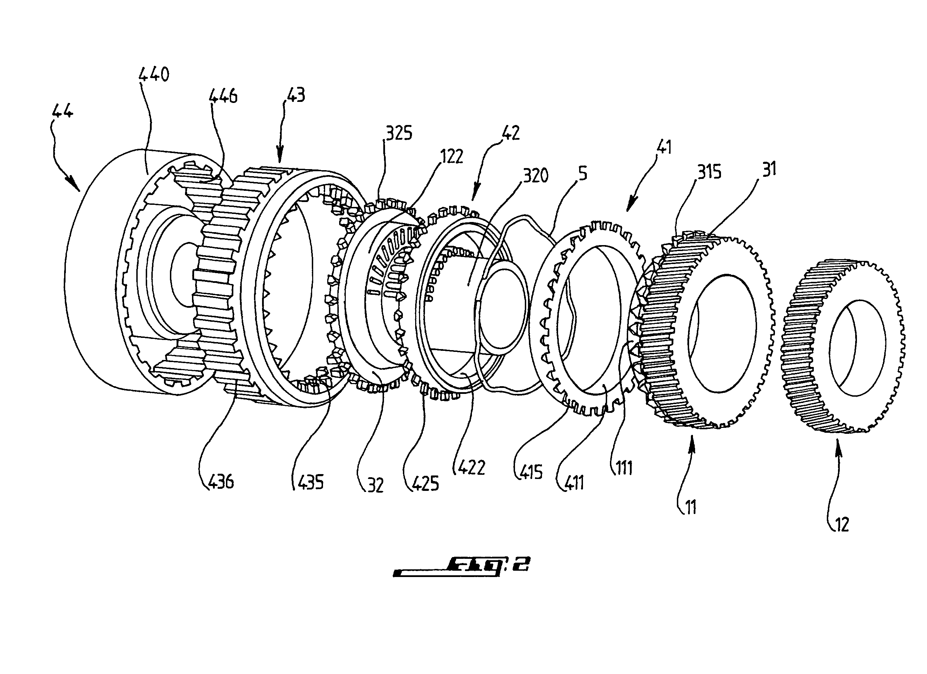

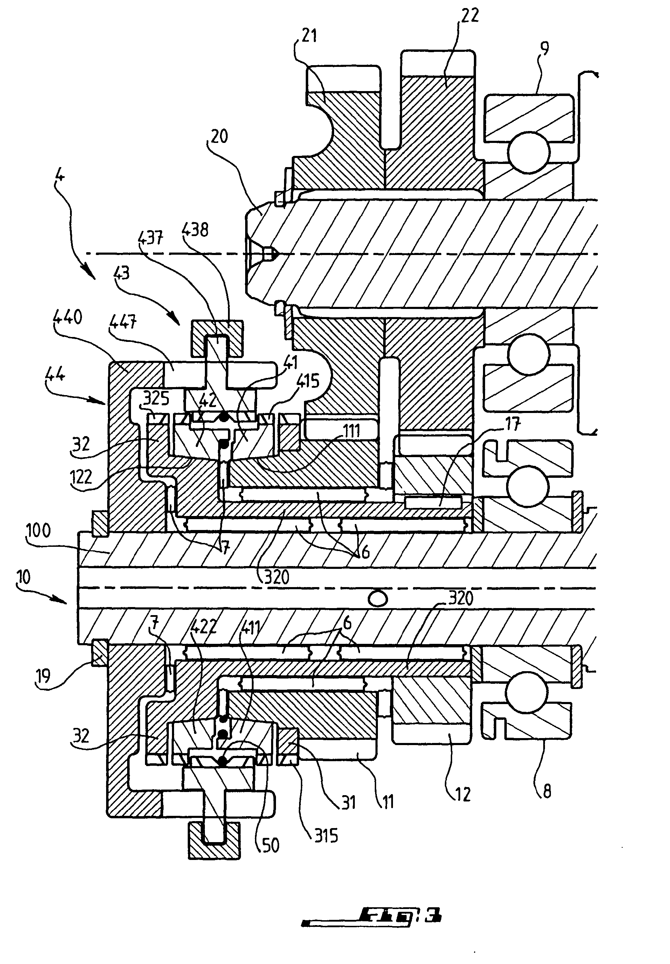

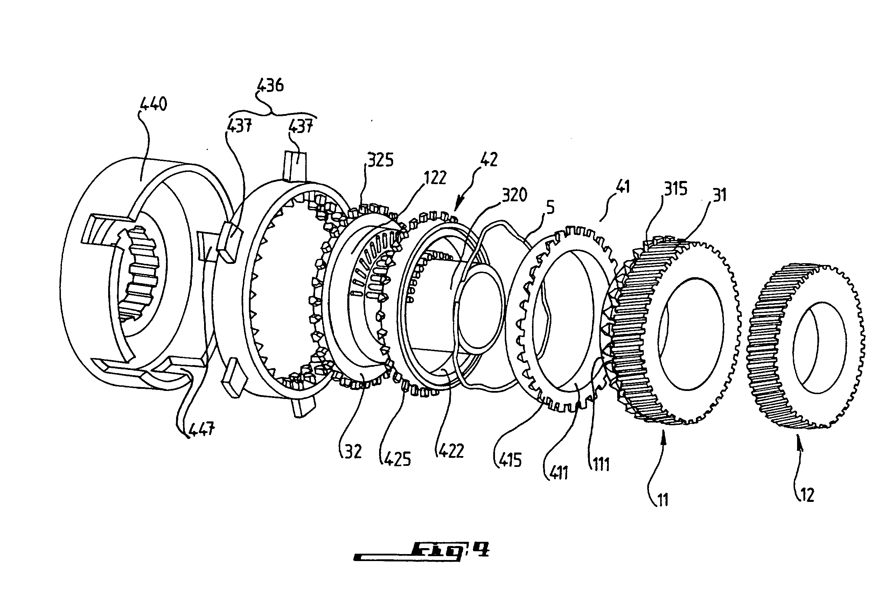

En réalité, le synchroniseur peut comprendre deux organes d'appui élastiques homothétiques l'un de l'autre, tels que 5 et 50 (figures 1 et 3), l'organe d'appui 50 n'étant pas représenté sur les figures 2 et 4 par souci de clarté.

Les bagues de synchronisation 41 et 42 sont mutuellement adjacentes, et les dentures mâles 415 et 425 sont respectivement portées par ces bagues 41 et 42.

Le moyeu 44 est monté fixe en rotation sur l'arbre 10, par exemple au moyen de cannelures (non visibles).

Le manchon 43, qui porte une denture femelle 435, est monté fixe en rotation par rapport au moyeu 44.

Ce manchon est cependant monté axialement coulissant en translation entre une première position d'engagement, pour laquelle la denture femelle 435 engrène avec les crabots 315 de la couronne 31, et une seconde position d'engagement, pour laquelle la denture femelle 435 engrène avec les crabots 325 de la couronne 32, ces première et seconde positions d'engagement étant définies de part et d'autre d'une position neutre pour laquelle la denture femelle 435 est libre de tout engrènement.

Les éléments de friction femelles 411 et 422, qui prennent avantageusement la forme de cônes femelles, sont respectivement portés par les bagues de synchronisation 41 et 42, et disposés en regard des éléments de friction mâles 111 et 112 avec lesquels ils coopèrent sur commande pour accoupler progressivement en rotation, sous l'effet d'une sollicitation élastique axiale, le manchon 43 avec l'un ou l'autre des pignons 11 et 12.

Chaque organe d'appui élastique tel que 5 et 50 prend par exemple la forme d'un jonc annulaire formant ressort, et sert à transmettre une sollicitation élastique axiale à la bague de synchronisation 41 lorsque le manchon 43 se déplace de sa position neutre vers sa première position d'engagement, et une sollicitation élastique axiale à la bague de synchronisation 42 lorsque le manchon 43 se déplace de sa position neutre vers sa seconde position d'engagement, chaque sollicitation axiale étant suivie d'une synchronisation grâce à l'intervention des éléments de friction 411 et 422.

Selon un premier aspect spécifique de l'invention, le moyeu 44 est monté sur une extrémité 100 de l'arbre 10, et par exemple axialement bloqué par une butée 19 en bout d'arbre.

Selon un second aspect spécifique de l'invention, le pignon 11 avec lequel le manchon engrène dans sa première position d'engagement est monté sur l'arbre 10 entre le synchroniseur 4 et le pignon 12 avec lequel le manchon engrène dans sa seconde position d'engagement.

Selon un troisième aspect spécifique de l'invention, la couronne à crabots 32 est reliée au pignon 12 par l'intermédiaire d'une douille cylindrique 320 qui passe entre l'arbre 10 et le pignon 11, la douille 320 et le pignon 12 étant par exemple assujettis en rotation l'un à l'autre au moyen d'une clavette 17.

Et selon un quatrième aspect spécifique de l'invention, le moyeu 44 présente une partie active 440, conformée en cloche, avec laquelle engrène une troisième denture mâle portée par le manchon 43.

Grâce à cet agencement, il est possible de placer, en bout d'arbre et dans un encombrement normalement occupé par un seul pignon, deux pignons 11 et 12 disposés côte à côte et à proximité immédiate d'un roulement 8, de sorte que ces pignons peuvent supporter des efforts importants sans que leur axe de rotation sous charge ne s'écarte de façon sensible de l'axe de l'arbre 10 au repos.

L'invention permet donc d'augmenter, de façon aisée et peu coûteuse, le nombre de rapports de vitesses offerts par une boîte de vitesses préexistante, et par exemple de transformer une boîte à cinq rapports de vitesses en marche avant en une boîte à six rapports de vitesses en marche avant.

De préférence, le module de changement de vitesses de l'invention comprend des organes de réduction de frottement axiaux et radiaux, tels que des aiguilles de roulement axiales 6 disposées entre l'arbre 10 et la douille 320 et entre la douille 320 et le premier pignon 11, et des aiguilles de roulement radiales 7, disposées entre le pignon 12 et le pignon 11, entre le pignon 11 et la couronne à crabots 32, et entre la couronne à crabots 32 et le moyeu 44.

Dans le cas du premier mode de réalisation de l'invention, illustré aux figures 1 et 2, la troisième denture mâle 436 portée par le manchon 43 est formée de cannelures externes, auquel cas la partie active 440 du moyeu conformée en cloche est elle-même garnie de cannelures internes 446 engrenant avec les cannelures externes du manchon 43.

Dans le cas du second mode de réalisation de l'invention, illustré aux figures 3 et 4, la troisième denture mâle 436 portée par le manchon 43 est formée par une pluralité de reliefs radiaux tels que 437, la partie active 440 du moyeu conformée en cloche présentant alors une pluralité d'échancrures axiales 447 correspondantes, dans lesquelles les reliefs radiaux 437 sont reçus à coulissement.

Dans ce dernier cas, les reliefs radiaux 437 peuvent être recouverts d'une bague circulaire 438 susceptible de glisser sur un dispositif de commande tel qu'une fourchette.

Comme le comprendra l'homme de l'art à la lecture de ce qui précède, l'invention offre une autre possibilité pour augmenter le nombre de rapports d'une boîte de vitesses, cette autre possibilité consistant à rallonger l'axe 20 pour lui faire porter un pignon de transmission monté fou sur cet axe 20 en regard de la partie active 440 du moyeu 44, et à implanter, sur la périphérie externe de cette partie active 440, une denture externe de changement de rapport engrenant avec le pignon supplémentaire ainsi porté par l'axe 20.

## Revendications

1. Module de changement de vitesses pour boîte de vitesses, comprenant un arbre (10), des premier et second pignons (11, 12) montés fous sur l'arbre (10), des première et seconde couronnes (31, 32) garnies de crabots (315, 325) et respectivement solidaires en rotation des premier et second pignons (11, 12), des premier et second éléments de friction mâles (111, 122) mutuellement adjacents et respectivement solidaires en rotation des premier et second pignons (11, 12), et un synchroniseur (4), ce synchroniseur comprenant lui-même : des première et seconde bagues de synchronisation (41, 42) mutuellement adjacentes; des première et seconde dentures mâles (415, 425) respectivement portées par les première et seconde bagues de synchronisation (41, 42); un moyeu (44) monté fixe en rotation sur l'arbre (10); un manchon (43) portant une denture femelle (435), monté fixe en rotation par rapport au moyeu (44), et axialement coulissant en translation, de part et d'autre d'une position neutre pour laquelle la denture femelle (435) est libre de tout engrènement, entre des première et seconde positions d'engagement pour lesquelles la denture femelle (435) engrène respectivement avec les crabots (315, 325) des première et seconde couronnes (31, 32); des premier et second éléments de friction femelles (411, 422), respectivement portés par les première et seconde bagues de synchronisation (41, 42) et disposés en regard des premier et second éléments de friction mâles (111, 112) avec lesquels ils coopèrent sélectivement pour accoupler progressivement en rotation, sous l'effet d'une sollicitation élastique axiale, le manchon (43) avec l'un ou l'autre des pignons (11, 12); et un organe d'appui élastique (5) pour transmettre sélectivement aux première et seconde bagues de synchronisation (41, 42) une sollicitation élastique axiale lors de déplacements respectifs du manchon (43) de sa position neutre vers ses première et seconde positions d'engagement, **caractérisé en ce que** le moyeu (44) est monté sur une extrémité (100) de l'arbre (10), **en ce que** le premier pignon (11) est monté sur l'arbre (10) entre le second pignon (12) et le synchroniseur (4), **en ce que** la seconde couronne à crabots (32) est reliée au second pignon (12) par une douille cylindrique (320) passant entre l'arbre (10) et le premier pignon (11), et **en ce que** le manchon (43) porte une troisième denture mâle (436) qui engrène avec une partie active (440) du moyeu, qui est conformée en cloche.

2. Module de changement de vitesses suivant la revendication 1, **caractérisé en ce qu**'il comprend des organes axiaux (6) de réduction de frottement, tels que des aiguilles de roulement, disposés entre l'arbre (10) et la douille (320) et entre la douille (320) et le premier pignon (11).

3. Module de changement de vitesses suivant la revendication 1 ou 2, **caractérisé en ce qu**'il comprend des organes radiaux (7) de réduction de frottement, tels que des aiguilles de roulement, disposés entre le second pignon (12) et le premier (11), entre le premier pignon (11) et la seconde couronne à crabots (32), et entre la seconde couronne à crabots (32) et le moyeu (44).

4. Module de changement de vitesses suivant l'une quelconque des revendications précédentes, **caractérisé en ce que** l'organe d'appui élastique (5) comprend un ressort annulaire formé d'un jonc.

5. Module de changement de vitesses suivant l'une quelconque des revendications précédentes, **caractérisé en ce que** les éléments de friction mâles et femelles (111, 122, 411, 422) sont respectivement constitués par des cônes mâles et femelles.

6. Module de changement de vitesses suivant l'une quelconque des revendications précédentes, **caractérisé en ce que** la troisième denture mâle (436) portée par le manchon (43) est formée de cannelures externes, et **en ce que** la partie active (440) du moyeu conformée en cloche est garnie de cannelures internes (446) engrenant avec les cannelures externes du manchon (43).

7. Module de changement de vitesses suivant l'une quelconque des revendications 1 à 5, **caractérisé en ce que** la troisième denture mâle (436) portée par le manchon (43) est formée par une pluralité de reliefs radiaux (437), et **en ce que** la partie active (440) du moyeu conformée en cloche présente une pluralité d'échancrures axiales (447) correspondantes, dans lesquelles les reliefs radiaux (437) sont reçus à coulissement.

8. Application d'un module conforme à l'une quelconque des revendications précédentes à l'augmentation du nombre de rapports de vitesses offerts par une boîte de vitesses préexistante.

## Claims

1. A transmission module for a gear box, comprising a shaft (10), first and second pinions (11,12) idly mounted on the shaft (10), first and second crowns (31, 32) fitted with jaws (315, 325) and respectively firmly attached in rotation to the first and second pinions (11, 12), first and second mutually adjacent male friction elements (111, 122) and firmly attached in rotation to the first and second pinions (11, 12), respectively, and a synchronizer (4), this synchronizer itself comprising: first and second mutually adjacent synchromesh rings (41, 42); first and second male gear teeth (415, 425) respectively borne by the first and second synchromesh rings (41, 42); a hub (44) mounted fixedly in rotation on the shaft (10); a sleeve (43) bearing female gear teeth (435) mounted fixedly in rotation relative to the hub (44), and axially sliding in translation, on either side of a neutral position for which the female teeth (435) are free of any meshing, between first and second engagement positions for which the female teeth (435) respectively mesh with the jaws (315, 325) of the first and second crowns (31, 32); first and second female friction elements (411, 422), borne by the first and second synchromesh rings (41, 42) respectively and positioned facing first and second male friction elements (111, 112), with which they selectively cooperate in order to gradually couple under the effect of an axial elastic stress, the sleeve (43) in rotation with either one of the pinions (11, 12); and an elastic supporting member (5) for selectively transmitting to the first and second synchromesh rings (41, 42), an axial elastic stress during respective displacements of the sleeve (43) from its mutual position towards its first and second engagement positions, **characterized in that** the hub (44) is mounted on one end (100) of the shaft (10), **in that** the first pinion (11) is mounted on the shaft (10) between the second pinion (12) and the synchronizer (4), **in that** the second crown (32) with jaws is connected to the second pinion (12) by a cylindrical bushing (320) passing between the shaft (10) and the first pinion (11), and **in that** the sleeve (43) bears third male gear teeth (436) which mesh with an active portion (440) of the hub, which is conformed as a bell.

2. The transmission module according to claim 1, **characterized in that** it comprises axial members (6) for reducing friction, such as bearing needles, positioned between the shaft 10) and the bushing (320) and between the bushing (320) and the first pinion (11).

3. The transmission module according to claim 1 or 2, **characterized in that** it comprises radial members (7) for reducing friction, such as bearing needles, positioned between the second pinion (12) and the first (11), between the first pinion (11) and the second crown with jaws (32), and between the second crown with claws (32) and the hub (44).

4. The transmission module according to any of the preceding claims, **characterized in that** the elastic supporting member (5) comprises an annular spring formed with a ring.

5. The transmission module according to any of the preceding claims, **characterized in that** the male and female friction elements (111, 122, 411, 422) respectively consist of male and female cones.

6. The transmission module according to any of the preceding claims, **characterized in that** third male gear teeth (436) borne by the sleeve (43) are formed with external splines, and **in that** the active portion (440) of the hub conformed as a bell is provided with internal splines (446) which mesh with the external splines of the sleeve (43).

7. The transmission module according to any of claims 1 to 5, **characterized in that** third male gear teeth (436) borne by the sleeve (43) are formed by a plurality of radial reliefs (437) and **in that** the active portion (440) of the hub conformed as a bell has a plurality of corresponding axial notches (447) in which the radial reliefs (437) are slidably received.

8. An application of a module according to any of the preceding claims for increasing the number of gear speed ratios provided by a pre-existing gear box.

## Patentansprüche

1. Modul eines Schaltgetriebes für einen Getriebekasten, eine Welle (10) aufweisend, erste und zweite Zahnräder (11, 12), die beweglich auf der Welle (10) montiert sind, erste und zweite Kegelräder (31, 32), die mit Klauen (315, 325) versehen und jeweils mit den ersten und zweiten Zahnrädern (11, 12) rotierend verbunden sind, erste und zweite männliche Reibeelemente (111, 122), die jeweils nebeneinander liegen und jeweils mit den ersten und zweiten Zahnrädern (11, 12) rotierend verbunden sind, und eine Synchronisierungsvorrichtung (4), wobei diese Synchronisierungsvorrichtung selbst aufweist: erste und zweite Synchronisierungsringe (41, 42), die jeweils nebeneinander liegen; erste und zweite männliche Verzahnungen (415, 425), die jeweils von den ersten und zweiten Synchronisierungsringen (41, 42) getragen werden; eine Nabe (44), die fest rotierend auf der Welle (10) montiert ist; eine Muffe (43) mit einer weiblichen Verzahlung (435), die fest rotierend in bezug zu der Nabe (44) montiert ist, und axial verschiebend auf beiden Seiten einer neutralen Position gleitet, für welche die weibliche Verzahnung (435) von jedwedem Zahneingriff frei ist, zwischen ersten und zweiten Eingriffpositionen, für welche die weibliche Verzahnung (435) jeweils mit den Klauen (315, 325) der ersten und zweiten Kegelräder (31, 32) eingreift; erste und zweite weibliche Reibelemente (411, 422), die jeweils von den ersten und zweiten Synchronisierungsringen (41, 42) getragen werden und gegenüber den ersten und zweiten männlichen Reibeelementen (111, 112) angeordnet sind, mit welchen sie selektiv zusammenwirken, um schrittweise rotierend die Muffe (43) mit dem einen oder anderen Zahnrad (11, 12) unter Einwirkung einer axialen elastische Beanspruchung zu verkuppeln; und ein elastisches Stützorgan (5), um auf die ersten und zweiten Synchronisierungsringe (41, 42) selektiv eine elastische Beanspruchung während der jeweiligen Verlagerungen der Muffe (43) aus ihrer neutralen Position in ihre ersten und zweiten Eingriffspositionen zu übertragen, **dadurch gekennzeichnet, dass** die Nabe (44) auf einem Ende (100) der Welle (10) montiert ist, und dadurch, dass das erste Zahnrad (11) auf der Welle (10) zwischen dem zweiten Zahnrad (12) und der Synchronisierungsvorrichtung (4) montiert ist, und dadurch, dass der zweite Klauenring (32) mit dem zweiten Zahnrad (12) durch eine zylindrische Hülse (320) verbunden ist, die zwischen der Welle (10) und dem ersten Zahnrad (11) hindurchläuft, und dadurch, dass die Muffe (43) eine dritte männliche Verzahnung (436) trägt, die mit einem aktiven Teil (440) der Nabe verzahnt ist, der glockenförmig ausgebildet ist.

2. Modul eines Schaltgetriebes nach Anspruch 1, **dadurch gekennzeichnet, dass** es axiale Organe (6) zur Reduzierung der Reibung aufweist, wie zum Beispiel Wälznadeln, die zwischen der Welle (10) und der Hülse (320) und zwischen der Hülse (320) und dem ersten Zahnrad (11) angeordnet sind.

3. Modul eines Schaltgetriebes nach Anspruch 1 oder 2, **dadurch gekennzeichnet, dass** es radiale Organe (7) zur Reduzierung der Reibung aufweist, wie zum Beispiel Wälznadeln, die zwischen dem zweiten Zahnrad (12) und dem ersten (11), zwischen dem ersten Zahnrad (11) und dem zweiten Klauenring (32) und zwischen dem zweiten Klauenring (32) und der Nabe (44) angeordnet sind.

4. Modul eines Schaltgetriebes nach einem der vorhergehenden Ansprüche, **dadurch gekennzeichnet, dass** das elastische Stützorgan (5) eine ringförmige Feder aufweist, die von einem Sprengring gebildet wird.

5. Modul eines Schaltgetriebes nach einem der vorhergehenden Ansprüche, **dadurch gekennzeichnet, dass** die männlichen und weiblichen Reibeelemente (111, 122, 411, 422) jeweils von männlichen und weiblichen Kegeln gebildet werden.

6. Modul eines Schaltgetriebes nach einem der vorhergehenden Ansprüche, **dadurch gekennzeichnet, dass** die dritte männliche Verzahnung (436), die von der Muffe (43) getragen wird, von äußeren Rillen gebildet wird, und dadurch, dass der aktive Teil (440) der Nabe, der glockenförmig ausgebildet ist, mit inneren Rillen (446) versehen ist, die mit den äußeren Rillen der Muffe ineinander greifen.

7. Modul eines Schaltgetriebes nach einem der Ansprüche 1 bis 5, **dadurch gekennzeichnet, dass** die dritte männliche Verzahnung (436), die von der Muffe (43) getragen wird, von einer Mehrzahl radialer Reliefs (437) gebildet wird, und dadurch, dass der aktive Teil (440) der Nabe, der glockenförmig ausgebildet ist, eine Mehrzahl entsprechender axialer Aussparungen (447) aufweist, in denen die radialen Reliefs (437) gleitend aufgenommen werden.

8. Anwendung eines Moduls nach einem der vorhergehenden Ansprüche zur Erhöhung der Anzahl der von einem bereits existierenden Getriebekasten angebotenen Gangverhältnisse.
